# EUROPÄISCHE PATENTSCHRIFT

(11) **EP 2 106 162 B1**
(45) Veröffentlichungstag und Bekanntmachung des Hinweises auf die Patenterteilung: **20.07.2011**
(21) Anmeldenummer: 09165610.8
(22) Anmeldetag: 07.09.2000
(51) Int. Cl.: H04R 25/00

(54) **Verfahren zur Herstellung von Hörgeräten und Hörgerät**
Process for producing a hearing device and hearing device
Procédé pour produire un appareil auditif et appareil auditif

(43) Veröffentlichungstag der Anmeldung: 30.09.2009
(62) Teilanmeldung aus: 04020809.2
(73) Patentinhaber: Phonak AG, 8712 Stäfa (CH)
(72) Erfinder: Niccolai, Richard, 8610, Uster (CH)
(74) Vertreter: Kreutz, Thomas J.

(56) Entgegenhaltungen:
- EP-A- 0 821 542
- EP-A- 0 821 543
- US-A- 4 617 429

## Beschreibung

Die vorliegende Erfindung betrifft Verfahren, Verwendungen und Hörgeräte nach dem Oberbegriff der unabhängigen Ansprüche.

Zwei- oder Mehrkomponenten-Spritzgiessverfahren sind aus der Kunststoff-Verarbeitungstechnik bekannt. Es kann beispielsweise verwiesen werden auf Ch. Jaroschek "Das Mehrkomponenten-Spritzgiessverfahren" Swiss Plastics 19 (1997) Nr. 12 auf EP 821 543 A2, oder auf U. Stenglin "Hart/Weich-Verbindungen und anwendungsbezogene Modifizierbarkeit von TPE-S (SEBS/SEPS)", Swiss Plastics 20 (1998) Nr. 3. Darin sind die Vorteile von Zwei- oder Mehrkomponenten-Spritzgiessverfahren erläutert, nämlich bezüglich Werkzeugkosten, Personalkosten, Maschinenkosten und Materialkosten. Die erwähnten Verfahren werden grundsätzlich in Sandwich-Spritzgiessverfahren und in Overmoulding-Verfahren kategorisiert. Im vorliegenden Fall interessiert, wenn auch nicht ausschliesslich so doch primär, das erwähnte Overmoulding-Verfahren. Dabei wird ein Teil aus einer ersten Materialkomponente gefertigt und mindestens abschnittsweise mit einer zweiten, unterschiedlichen Materialkomponente überspritzt, womit an den ersten Teil der Zweite aus unterschiedlichem Material, aufgebaut wird. Es lassen sich alle spritzfähigen Thermoplast-Werkstoffe, insbesondere auch für das Overmoulding-Verfahren, einsetzen, aber auch ganz gezielt nicht verbindbare weitere Materialien.

Selbstverständlich sind auch bei der Hörgeräte-Produktion die oben erwähnten Kosten wichtige Produktionsfaktoren. Hinzu kommt aber bei der Hörgeräte-Fertigung grundsätzlich das Platzproblem, indem es ein permanentes Bedürfnis der erwähnten Branche ist, möglichst platzsparend zu bauen.

Es ist Aufgabe der vorliegenden Erfindung, ein Fertigungsverfahren vorzuschlagen, und entsprechend ein daraus resultierendes Hörgerät, welches Verfahren eine signifikante Erhöhung der Baudichte, an Hörgeräten erlaubt.

Zu diesem Zweck wird das Verfahren gemäss Anspruch 1 vorgeschlagen.

Bevorzugte Ausführungsformen des erfindungsgemässen Verfahrens, sind in den abhängigen Ansprüchen 2-6 wedergegeben.

Wie erwähnt wird am erfindungsgemässen Verfahren grundsätzlich mindestens eine vorgesehene Dichtung im Zusammenhang mit der Zwei- oder Mehrkomponentenspritztechnik aufgebaut, gemeinsam mit einem weiteren, an die Dichtung unmittelbar angrenzenden Teil, so beispielsweise und vorzugsweise einem Gehäuseteil oder einem durch das Gehäuse durchragenden Bedienungsorgan oder einem weiteren Hörgeräteteil, das für sich besonderes akkurat zu dichten ist.

In einer weiteren bevorzugten Ausführungsform des Herstellungsverfahrens, insbesondere für Aussenohr-Hörgeräte, wird vorgeschlagen den akustischen Leiter ausgangsseitig des elektrischmechanischen Wandlers, welcher akustische Leiter üblicherweise als Kunststoffrohr ausgebildet ist, mit dem erwähnten Spritzgiessverfahren zu fertigen, sei dies gemeinsam direkt mit einer Gehäusepartie, oder sei dies z.B. mit einem elastischen formschlüssig dichtenden in eine Gehäuseaufnahme einzulegenden Montageteil.

In einer weiteren bevorzugten Ausführungsform des erwähnten Verfahrens wird vorgeschlagen einen akustischen Leiter eingangsseitig des akustisch-elektrischen Hörgeräte-Wandlers, in der erwähnten Spritzgiesstechnik zu fertigen, sei dies, beispielsweise wiederum gemeinsam mit einer Partie des Hörgeräte-Gehäuses oder mit einem spezifisch ausgelegten, beispielsweise dichtenden, elastischen Montageteil. In weiteren Ausführungsformen des erfindungsgemässen Verfahrens, die selbstverständlich je einzeln oder in Kombination mit weiteren, bevorzugten Ausführungsformen einsetzbar sind, werden Aufnahmen für Hörgeräte-Komponenten bzw. -Teile im erwähnten Spritzgiessverfahren gefertigt, sei dies, gemeinsam mit Gehäuse-Partien und/oder gemeinsam mit weiteren, unmittelbar an sie angrenzenden Bauteilen.

In einer weiteren, bevorzugten Ausführungsform werden auf der Aussenseite des Gehäuses vorgegebene Flächenbereiche gemeinsam mit dem Gehäuse - aber aus anderem Material - im erwähnten Spritzgiessverfahren gefertigt, z.B. aus Designgründen und/oder um das Ertasten am Gehäuse angeordneter Bedienungsorgane allein mit den Fingern, zu erleichtern.

In Ansprüchen 7-9 wird ferner eine Verwendung beansprucht.

Die Erfindung wird anschliessend beispielsweise anhand von Figuren erläutert. Es zeigen:
Fig. 1 schematisch eine Partie eines Hörgeräte-Gehäuses in perspektivischer Darstellung mit erfindungsgemäss angebauter Dichtung.
Fig. 2 ein Querschnitt durch einen Teil des Gehäuses nach Fig. 1 mit der erfindungsgemäss aufgebauten Dichtung.
Fig. 3 einen Querschnitt durch die Gehäusewandung eines nach herkömmlichem Vorgehen aufgebauten Hörgerätes mit assemblierter Dichtung.
Fig. 4 schematisch einen Querschnitt durch einen Teil eines Hörgeräte-Gehäuses mit erfindungsgemäss angebautem akustischem Leiter und/oder Aufnahme für ein Modul.
Fig. 5 schematisch einen Querschnitt durch einen Gehäusewandungsabschnitt mit Bedienungseinheit und erfindungsgemäss aufgebauter Durchführung und Einheitshalterung.
Fig. 6 schematisch und prinzipiell das erfindungsgemässe Verbinden zweier Hörgerät-Funktionseinheiten.

Bereits die im Rahmen der Beschreibungseinleitung gegebenen Ausführungen eröffnen dem Fachmann ohne weiteres, je nach zu konzipierendem Hörgerät bzw. dessen Aufbau eine grosse Zahl Möglichkeiten, durch vereintes Verarbeiten im Zwei- oder Mehrkomponenten-Spritzgiessverfahren, insbesondere auch durch Overmoulding, zwei oder mehr der vorzusehenden Bauteile platzsparend vereint zu fertigen, und dann gemeinsam als ein integraler Teil zu assemblieren. Trotzdem sollen nachfolgend anhand einiger schematischer Beispiele, bevorzugte Einsatzweisen des erwähnten Spritzgiessverfahrens erläutert werden. Auf die eigentliche Technik der Zwei- oder Mehrkomponenten-Spritzgiessverfahren wird nicht eingegangen, denn diese ist, wie erwähnt, aus dem generellen Komponentenbau, insbesondere aus der Kunststoffpress- und Spritzgiesstechnik hinlänglichst bekannt.

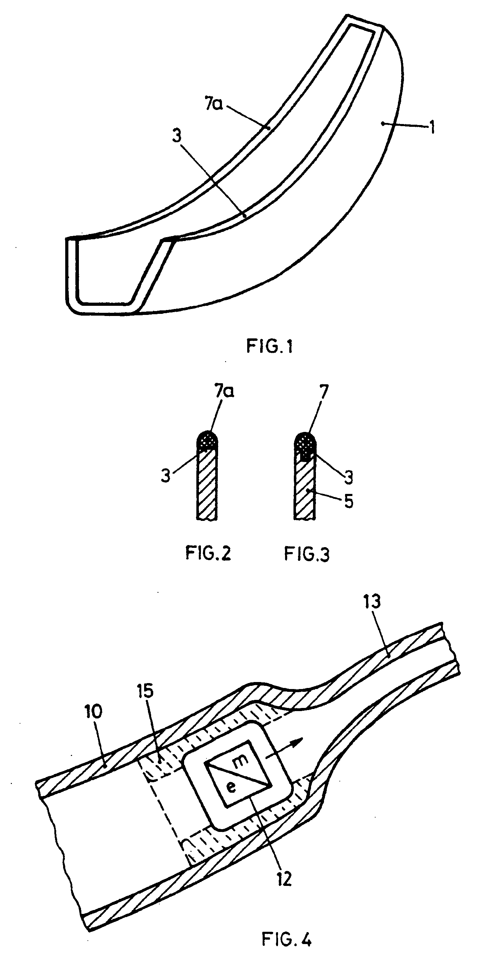

In Fig. 1 ist schematisch und perspektivisch die Schale 1 eines Hörgeräte-Gehäuses, beispielsweise eines Aussenohr-Hörgerätes, dargestellt. Entlang ihrer Stirnflächen 3 soll sie mit weiteren Gehäusepartien so assembliert werden, dass ihr Innenraum entlang dieser Stirnflächen 3 dicht verschlossen wird. Herkömmlicherweise wird dies dadurch gelöst, dass gemäss Figur 3 im Bereich der Stirnflächen 3 Positionierungs- und Halterungsvorkehrungen, wie dargestellt beispielsweise Nuten in die Wandung der Gehäusepartie 1 eingearbeitet werden, in welche nochmals, manuell, eine Dichtung 7 montiert wird.

Erfindungsgemäss wird nun an der erwähnten Gehäuseschale 1 bzw. der Stirnfläche 3 direkt, durch Zweikomponenten-Overmoulding-Spritzgiessverfahren eine Dichtung 7a aufgespritzt. Dabei genügt das Material der eigentlichen Gehäuseteilwandung den an das Gehäuse bezüglich Stabilität etc. zu stellenden Anforderungen, während das Material der im Overmoulding aufgespritzten Zweitkomponente den an die Dichtung 7a zu stellenden Anforderungen genügt. Die Dichtungspartie 7a kann dabei exakt so dimensioniert werden, wie es den Dichtungsanforderungen entspricht, ebenso kann die Wandung der Gehäusepartie 1 ausschliesslich auf Kriterien hin, die an das Gehäuse zu stellen sind, dimensioniert und geformt werden. Eine Ausbildung der Gehäusewand, welche zusätzlich der Assemblierung einer getrennten Dichtung 7, gemäss Fig. 3, genügt, entfällt.

In Fig. 4 ist schematisch dargestellt, wie beispielsweise an einem Hörgeräte-Gehäuse 10 einerseits, erfindungsgemäss ein akustischer Leiter 13 angebaut wird, z.B. ausgangsseitig eines im Hörgerät montierten, elektro-mechanischen Wandlers oder, in Analogie, eingangsseitig eines am Hörgerät vorgesehenen akustisch-elektrischen Wandlers (nicht dargestellt). Zusätzlich kann für die Wandlereinheit 12 im Gehäuse 10 ein elastischer, federnder Aufnahmeblock 15 integriert sein. Gehäuse 10 und akustischer Leiter 13 und/oder Gehäuse 10 und Aufnahmeblock 15 oder alle drei, Gehäuse 10, Aufnahmeblock 15 und akustischer Leiter 13 werden als ein Teil in einem Zwei- oder Dreikomponenten-Spritzgiessverfahren gefertigt. Dabei wird als Material des Gehäuses 10 bzw. dessen Wandung in üblicher Art und Weise ein Material gewählt, das den an das Gehäuse zu stellenden Anforderungen genügt, als Material für den akustischen Leiter 13 z.B. ein Material, welches, wie beispielsweise für das Aussenohrgerät, biokompatibel ist, und es wird als Material für den Aufnahmeblock 15 ein Material gewählt, das bezüglich Schlag- und Schockdämpfung und Halterung des Wandlers 12 den diesbezüglich zu stellenden Anforderungen genügt. Es ist dabei auch ohne weiteres möglich, beispielsweise das Material des Blockes 15 elektrisch leitend zu wählen, soll beispielsweise der Wandler 12 elektrisch geschirmt werden.

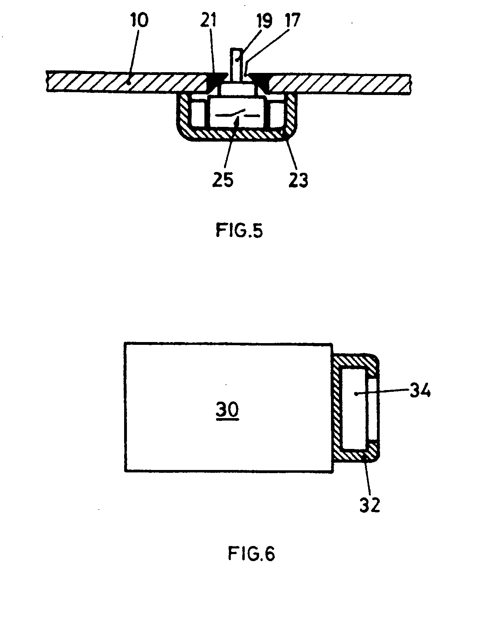

Wiederum schematisch ist in Fig. 5 ein erster Teil, beispielsweise wiederum eine Wandung einer Gehäusepartie 10 dargestellt, mit einer Durchführungsöffnung 17, durch welche ein Bedienungsorgan 19, wie ein Schalter ein Bedienungselement 25 des Hörgerätes, durchragt. Dadurch dass im Umrandungsbereich der Durchführungsöffnung 17 für das Bedienungsorgan 19, im Zwei- oder Mehrkomponenten-Spritzgiessverfahren, gemeinsam mit dem Gehäuseteil 10, elastische gegebenenfalls dichtende Partien 21 angespritzt werden, und gegebenenfalls zusätzlich auch eine Aufnahme 23 für federnde, satte Fixierung der Einheit 25 wird ein optimal platzsparender Einbau der Einheit 25 ermöglicht.

In Fig. 6 ist dargestellt wie am Gehäuse 30 eines Aggregates 34, beispielsweise eines Elektronikmoduls des Hörgerätes eine Aufnahme 32 zur entsprechenden Positionierung und Halterung eines weiteren Aggregates 34 mit dem erwähnten Zwei- oder Mehrkomponenten-Spritzgiessverfahren angebaut wird, womit wiederum eine optimal kleinbauende Assemblierung mit hoher Packungsdichte ermöglicht wird.

Aufgrund des erfindungsgemässen Herstellungsverfahrens werden grosse Einsparungen beim Assemblieren erreicht: Es werden Assemblierungs-Schritte durch die integrale Zwei- oder Mehrteil-Herstellung eingespart. Weiter wird der gerade für Hörgeräte äusserst wichtige Vorteil erwirkt, dass funktionell unterschiedliche Teile, die nach Assemblierung ohnehin aneinander zu liegen kommen, gezielt mit den jeweils notwendigen Materialeigenschaften ausgelegt werden können, aber trotzdem als ein integraler Teil. Dadurch entfallen Bauvolumen konsumierende Massnahmen zur nachhaltigen Assemblierung dieser Teile. Nimmt man hierfür als Beispiel die in den Fig. 1 bis 3 dargestellte Ausführungsform so ist ersichtlich, dass eine Dichtung 7a die nur gerade den Dichtungsanforderungen genügen muss, wesentlich kleiner und dünner gefertigt werden kann, wenn sie am Teil 1 integral angeformt ist, als wenn sie separat als Dichtung 7 gefertigt und darnach, beispielsweise manuell, an die entsprechenden Stirnflächen des Teiles 1 montiert werden muss, sei dies durch Kleben, Stecken oder dgl. Die Präzision mit welcher die Dichtungspartie 7a unmittelbar an die die Stirnfläche 3 bildende Wand des Teiles 1 angebaut werden kann, ist mit gleicher Dimensionierung durch Assemblieren getrennter Teile kaum möglich oder nur mit hohem Aufwand.

## Patentansprüche

1. Hörgerät aus mehreren Teilen nachhaltig assembliert, **dadurch gekennzeichnet, dass** mindestens zwei der Teile aus unterschiedlichen Materialien durch Zwei- oder Mehrkomponenten-Spritzgiesstechnik gemeinsam gefertigt sind, und dass eines der mindestens zwei Teile eine Dichtung ist (7a,7a) und ein zweites der mindestens zwei Teile ein unmittelbar an die Dichtung angrenzendes Teil (5) ist, und dass zwischen der Dichtung (7,7a) und dem unmittelbar an die Dichtung angrenzenden Teil (5) keinerlei Verbindungselemente oder -partien vorgesehen sind.

2. Hörgerät gemäss Anspruch 1, **dadurch gekennzeichnet, dass** das unmittelbar an die Dichtung angrenzende Teil ein Gehäuseteil ist.

3. Hörgerät gemäss einem der vorangegangenen Ansprüche, **dadurch gekennzeichnet, dass** es ein Aussenohr-Hörgerät ist.

4. Verfahren zur Herstellung eines aus mehreren Teilen nachhaltig assemblierten Hörgerätes, **dadurch gekennzeichnet, dass** mindestens zwei der Teile aus unterschiedlichen Materialien durch Zwei- oder Mehrkomponenten-Spritzgiesstechnik gemeinsam gefertigt werden, und dass eines der mindestens zwei Teile eine Dichtung (7,7a), ist und ein zweites der mindestens zwei Teile ein unmittelbar an die Dichtung angrenzendes Teil (5) ist, und dass zwischen der Dichtung (7, 7a) und dem unmittelbar an die Dichtung (5) angrenzenden Teil keinerlei Verbindungselemente oder -partien vorgesehen sind.

5. Verfahren gemäss Anspruch 4, **dadurch gekennzeichnet, dass** das unmittelbar an die Dichtung angrenzende Teil ein Gehäuseteil ist.

6. Verfahren gemäss Anspruch 4 oder Anspruch 5, **dadurch gekennzeichnet, dass** das Hörgerät ein Aussenohr-Hörgerät und das Verfahren ein Verfahren zur Herstellung eines aus mehreren Teilen nachhaltig assemblierten Aussenohr-Hörgerätes ist.

7. Verwendung eines Zwei- oder Mehrkomponenten Spritzgiessverfahrens zur Einsparung mindestens eines Assemblierungsschrittes bei einem Verfahren zur Herstellung von Hörgeräten, indem mindestens zwei Hörgeräteteile aus unterschiedlichen Materialien dadurch erstellt und nachhaltig assembliert werden, dass sie aus unterschiedlichen Materialkomponenten durch Zwei-oder Mehrkomponenten-Spritzgiesstechnik bereits vereint erstellt und dadurch assembliert werden, wobei eines der mindestens zwei Hörgeräteteile eine Dichtung (7,7a) ist und ein zweites der mindestens zwei Hörgeräteteile ein unmittelbar an die Dichtung angrenzendes Teil (5) ist, und wobei zwischen der Dichtung und dem unmittelbar an die Dichtung angrenzenden Teil keinerlei Verbindungselemente oder -partien vorgesehen sind.

8. Verwendung gemäss Anspruch 7, **dadurch gekennzeichnet, dass** das unmittelbar an die Dichtung angrenzende Teil ein Gehäuseteil ist.

9. Verwendung gemäss Anspruch 7 oder Anspruch 8, **dadurch gekennzeichnet, dass** das Hörgerät ein Aussenohr-Hörgerät ist.

## Claims

1. Hearing device permanently assembled from multiple parts, **characterised in that** at least two of the parts are conjointly manufactured of different materials by two- or multiple-component injection moulding, and that one of the at least two parts is a seal (7, 7a) and a second of the at least two parts is a part (5) immediately adjacent to the seal, and that absolutely no connecting elements or connecting sections are provided between the seal (7, 7a) and the part (5) immediately adjacent to the seal.

2. Hearing device according to claim 1, **characterised in that** the part immediately adjacent to the seal is a housing part.

3. Hearing device according to one of the preceding claims, **characterised in that** it is a behind-the-ear hearing device.

4. Method for manufacturing a hearing device permanently assembled from multiple parts, **characterised in that** at least two of the parts are conjointly manufactured of different materials by two- or multiple-component injection moulding, and that one of the at least two parts is a seal (7, 7a) and a second of the at least two parts is a part (5) immediately adjacent to the seal, and that absolutely no connecting elements or connecting sections are provided between the seal (7, 7a) and the part (5) immediately adjacent to the seal.

5. Method according to claim 4, **characterised in that** the part immediately adjacent to the seal is a housing part.

6. Method according to claim 4 or claim 5, **characterised in that** it is a behind-the-ear hearing device and that the method is a method for manufacturing of a behind-the-ear hearing device permanently assembled from multiple parts.

7. Use of a two- or multiple-component injection moulding process for saving at least one assembly step in a method for manufacturing hearing devices, where at least two hearing device parts are constructed of different materials and permanently assembled in that they are already conjointly constructed of different material components by means of two- or multiple-component injection moulding and are thus assembled, wherein one of the at least two parts is a seal (7, 7a) and a second of the at least two parts is a part (5) immediately adjacent to the seal, and that absolutely no connecting elements or connecting sections are provided between the seal (7, 7a) and the part (5) immediately adjacent to the seal.

8. Use according to claim 7, **characterised in that** the part immediately adjacent to the seal is a housing part.

9. Use according to claim 7 or claim 8, **characterised in that** the hearing device is a behind-the-ear hearing device.

## Revendications

1. Dispositif auditif assemblé en plusieurs parts de manière permanente, **caractérisé en ce qu'**au moins deux des parts sont fabriquées en commun en matières différentes par moulage par injection à deux ou à multi, et qu'une des aux moins deux parts est un joint (7, 7a) et qu'une deuxième des aux moins deux parts est une part (5) avoisinante de manière immédiate au joint, et qu'entre le joint (7, 7a) et la part (5) avoisinante de manière immédiate au joint aucun des éléments de liaison ou partie de liaison sont prévus.

2. Dispositif auditif selon la revendication 1, **caractérisé en ce que** la part avoisinante de manière immédiate au joint est une part de boîte.

3. Dispositif auditif selon une des revendications précédentes, **caractérisé en ce que** c'est un dispositif auditif à porter à l'extérieur de l'oreille.

4. Procédé de fabriquer un dispositif assemblé en plusieurs parts de manière permanente, **caractérisé en ce qu'**au moins deux parts sont fabriquées en matières différentes par moulage par injection à deux ou à multi, et qu'une des aux moins deux parts est un joint (7, 7a) et qu'une deuxième des aux moins deux parts est une part (5) avoisinante de manière immédiate au joint, et qu'entre le joint (7, 7a) et la part (5) avoisinante de manière immédiate au joint aucun des éléments de liaison ou partie de liaison sont prévus.

5. Procédé selon la revendication 4, **caractérisé en ce que** la part avoisinante de manière immédiate au joint est une part de boîte.

6. Procédé selon la revendication 4 ou 5, **caractérisé en ce que** le dispositif auditif est un dispositif auditif à porter à l'extérieur de l'oreille et que le procédé est un procédé pour fabriquer un dispositif auditif à porter à l'extérieur de l'oreille assemblé en plusieurs parts de manière permanente.

7. Utilisation d'un procédé moulage par injection à deux ou à multi pour économiser au moins un pas d'assemblage dans un procédé de fabrication des dispositifs auditifs, en fabriquant et en assemblant de manière permanente au moins deux parts des dispositifs auditifs en matières différentes par déjà les fabriquer de manière unie en composants des matières différentes par moulage à injection à deux ou à multi et les assembler par cela, une part des aux moins deux parts du dispositif auditif étant un joint (7, 7a) et une autre des aux moins deux parts du dispositif auditif étant une part (5) avoisinante de manière immédiate au joint, et entre le joint (7, 7a) et la part (5) avoisinante de manière immédiate au joint aucun des éléments de liaison ou partie de liaison étant prévus.

8. Utilisation selon la revendication 7, **caractérisé en ce que** la part avoisinante de manière immédiate au joint est une part de boîte.

9. Utilisation selon la revendication 7 ou 8, **caractérisé en ce que** le dispositif auditif est un dispositif auditif à porter à l'extérieur de l'oreille.
